# EUROPEAN PATENT APPLICATION

(11) **EP 2 679 532 A1**
(43) Date of publication of application: **01.01.2014**
(21) Application number: 12173905.6
(22) Date of filing: 27.06.2012
(51) Int. Cl.: B66B 15/04, F16H 55/32

(54) **Elevator rope pulley**

(71) Applicant: Kone Corporation, 00330 Helsinki (FI)
(72) Inventor: Sihvola, Esko, 05830 Hyvinkää (FI)
(74) Representative: Graf Glück Kritzenberger

(57) **Abstract**

The invention relates to an elevator rope pulley (10; 30) configured to be arranged in the roping of the hoisting ropes and/or suspension ropes and/or compensation ropes of an elevator, which pulley has a metal hub (12) and a rim (16) containing grooves (18), which pulley has two end faces (20, 22) perpendicular to its rotation axis. In radial direction of the pulley there is a succession of at least three concentric layers (24, 26, 28) surrounding the hub, which each extend from the first to the second end face, whereby the first and third layer (24, 28; 32, 36) consist of rubber or plastics whereas the second layer (26; 34) consists of metal. Such elevator rope pulley offers excellent noise dampening characteristics and reduces noise generation by the running of the ropes in the grooves of the pulley.

## Description

The present invention relates to an elevator rope pulley. Rope pulleys are used in elevators, e.g. for the traction sheave which drives the hoisting ropes or for diverting pulleys for achieving higher suspension ratios. On this behalf the diverting pulleys are mounted in the elevator shaft or machine room as well as in connection with elevator components, e.g. on the elevator car and counterweight. Each pulley has a hub and a rim containing grooves in which the ropes run. One problem with rope pulleys is that they generate noise when the ropes are running over them. Furthermore, the rope pulley is a means which builds a connection between the elevator components and the ropes and therefore transmits noise via its structure. Up to now the noise generation by elevator rope pulleys has not been any problem. Anyway, in recent times higher suspension ratios are used in traction sheave elevators, particularly in elevators where no counterweight is used. These higher suspension ratios of 3:1, 4:1, 5:1 and currently up to 10:1 require a lot of diverting pulleys on the shaft side as well as on the car side. If a counterweight is used in the elevator an according number of diverting pulleys has to be provided also on the counterweight side. Therefore, the number of elevator rope pulleys used in the elevator is increased drastically and the noise generated by the pulleys becomes a matter of relevance.

It is therefore object of the invention to provide an elevator rope pulley which generates less noise and which better isolates the noise transmission between the ropes and the corresponding elevator component to which the rope pulley is mounted.

The object is solved with an elevator rope pulley according to claim 1. Preferred embodiments of the invention are subject matter of the dependent claims.

According to the invention the rope pulley has in radial direction a succession of at least three layers which each extend from the first end face to the second end face of the pulley, which means that each layer builds a closed ring-like layer in the rope pulley structure which extends from the first end face to the second end face of the diverting pulley. This has the effect that the noise has to pass through all three layers without any possibility to bypass one of it.

The first layer is layer-consisting of plastics or rubber, i. e. a layer with a somewhat lower acoustic impedance. This layer is followed by a second layer made of metal which could e.g. be provided as a kind of metal ring arranged concentrically to the hub of the elevator rope pulley. This second metal layer has an essentially higher acoustic impedance than the first layer. A third layer is provided surrounding this second metal layer, which third layer is made of plastics or rubber. This third layer may for example build the rim of the rope pulley containing the groves for the ropes. On the other hand it is possible to provide the rope groves in further metal or plastic/rubber structure surrounding the third layer, in which case the rim is formed by a separate layer surrounding the third layer.

The applicant has found out that the succession of a first soft layer (low impedance) followed by a hard layer (high acoustic impedance) and again followed by a soft layer with a lower acoustic impedance leads to a dramatical increase of the noise insolation of the structure. Accordingly, this inventive succession of three layers around the pulley hub (including the bearings of the hub) very economically solves any noise problems which arise with the increasing use of diverting pulleys in an elevator.

Theoretically, the invention provides the first layer consisting of a material with a first acoustic impedance z₁, the following second layer consisting of a material with a second acoustic impedance z₂ and the following third layer consisting of a material with a third acoustic impedance z₃, whereby the acoustic impedance z₂ of the second layer is higher than the acoustic impedance z₁, z₃ of the first and third layer. This means instead of plastic and metal layers also layers can be used which have a difference in their acoustic impedance. Therefore, e.g. three plastic layers can be used wherein the second layer is made from a plastic having an essentially higher acoustic impedance than the others. On the other hand also three metal layers an be used with the same properties. Such a succession may e.g. be aluminum/steel/aluminum. The acoustic impedance of steel is 45.600.000 Ns/m³, whereas the acoustic impedance of aluminum is 16.900.000 Ns/m³. Also such a compound of layers is efficient with respect to a good noise insulation. Anyway, the difference to the acoustic impedance of Plastics is essentially larger. Accordingly, Polystyrene as a plastic material has an acoustic impedance of 2.300.000 Ns/m³. Polyurethane has an acoustic impedance of 73.000 Ns/m³. (All above values of acoustic impedance at room temperature). Accordingly, the invention works best with rubber or plastics for the first and third layer and with metal for the second layer. Here it has to be considered that rubber and plastic also have better noise insulation properties in the bulk material than metal. For the total noise reduction not only the noise insulation at the borders between two layers is relevant but also the noise insulation properties of the bulk material of the layers. Accordingly, also a compound of three rubber/plastic layers would be advisable which could provide the required noise insulation at the borders of the layers (based on the difference of the acoustic impedance of the adjacent layers) as well as the necessary noise insulation in the bulk material of the layers, e.g. Polyurethane/Polystyrene/Polyurethane. The noise insulation is the better the higher the difference is between the acoustic impedances of the three layers.

Preferably the first and third layer is made of polyurethane or polyamide. These materials have comparably low acoustic impedance combined with a sufficient rigidity to bear the load which is applied to an elevator rope pulley.

Preferably the second layer is a metal ring, preferably steel ring, which is located concentrically between the both softer layers and also concentrically to the hub of the elevator rope pulley. A metal ring can easily be fabricated by cutting a ring from a metal tube. Accordingly, a metal ring layer having high acoustic impedance can be provided in a very economical way. This metal ring also provides additional rigidity to the surrounding softer layers. Therefore, the second metal layer does not only improve the acoustic insulation but also improves the mechanical properties of the rope pulley.

Preferably, the first layer has a larger thickness in the radial direction of the pulleys than the second one. The first layer is a softer layer which preferably consists of polyurethane or polyamide. This first layer is preferably located around the hub of the elevator rope pulley, for example around the bearing which might build the rim of the hub. A softer material leads to a good noise insulation in the rope pulley. Thus, this first layer effectively dampens the noise coming from or to the hub area of the elevator rope pulley. On this behalf it is essential that this first dampening layer of a softer material is comparably thicker than the second layer which only has the function to provide two successive borders where materials with different acoustical impedances meet. Accordingly, the second hard layer which is preferably made from metal can be comparably thin as the noise dampening function is not implemented by the bulk insulation properties but simply by the fact that this layer provides two additional boarders to the softer material at the inner and outer circumference of the metal ring.

It is essential that the first and the third layers are softer (have a lower acoustic impedance) than the second layer as in the total noise succession though the pulley this means that the noise has to pass four borders of extremely different acoustic impedances: First the border hub (bearing) to first layer, second the border first layer to second layer, third the border second layer to third layer and eventually fourth border: third layer to rim. In case the metal layers were the first and third layers only two borders of essential acoustic impedance changes would be present.

Also the third softer layer is merely provided for introducing further boarders of different acoustic impedances into the rope pulley so that in the succession from the hub to the rim of the elevator rope pulley a lot of boarders are established which have to be passed by the noise.

It is preferable, that the first inner layer is comparably thick and the second and third layers are comparably thin. For example the first layer may be at least five times as thick as the second and/or third layer. The first layer may have a thickness equaling a half of the pulley radius. Preferably, the metal ring of the second layer has a thickness of preferably only one fifth, preferably one tenth of the radius of the pulley at the maximum.

If the third layer forms the rim of the elevator rope pulley containing the groves a further advantage is achieved. As the hoisting ropes are mostly made from a metal, the provision of grooves made of plastic leads to less noise production when the metal ropes meet and leave the plastic grooves. Accordingly, in this case also the noise generation caused by the running of the ropes in the grooves is reduced.

In case the rim containing the grooves is made of plastics preferably the hardness of the plastics at the groove bottom is higher than in the groove edges. This leads to the fact that on one hand the grooves are rigidly supported in the grooves whereas the softer groove edges effectively prevent noise generation when the rope runs into the groove.

Preferably, the metal ring is located in the outer third portion of the radius of the pulley. By this arrangement the first layer having good noise insulation properties of the bulk material can be kept quite thick and on the other hand the radial outer placement of the second metal layer improves the stability of the pulley.

The above mentioned embodiments can be combined arbitrarily with each other as long as there are no technical reasons against such a combination.

The invention is now described with the aid of the schematic drawing.
- Figure 1: shows a partially section view on an elevator rope pulley,
- Figure 2: shows an enlarged portion of the rope pulley of figure 1 in the rim area,
- Figure 3: shows a second embodiment of a partly section elevator rope pulley, and
- Figure 4: shows an enlarged detail of the rope pulley of figure 3 in the rim area.

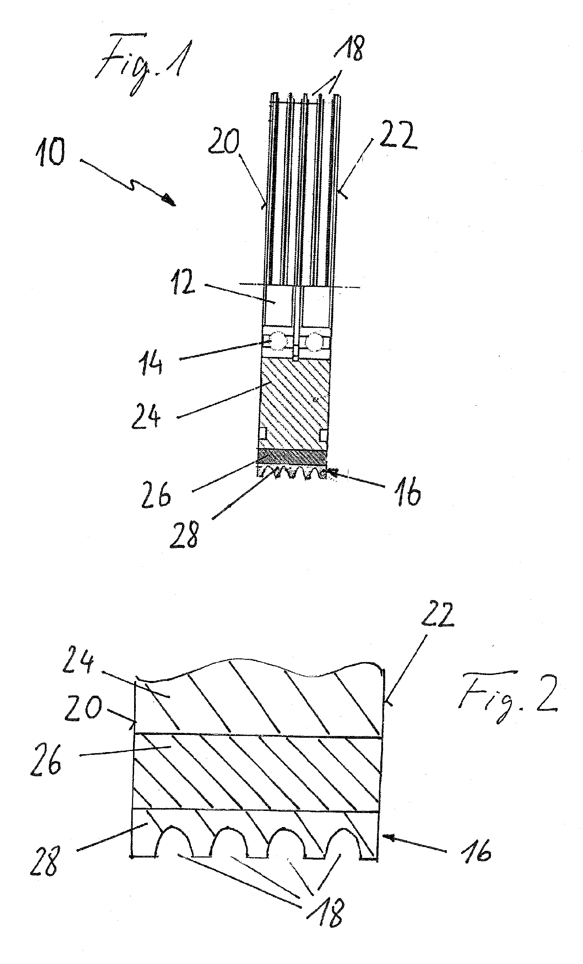

Figure 1 shows an elevator rope pulley 10 which may be used as a diverting pulley or as a traction sheave of a traction sheave elevator. The pulley 10 has four rope groves 18 at its circumference. In axial direction the rope pulley 10 has a first end face 20 and a second end face 22 opposite to the first.

The rope pulley 10 has in radial direction from the hub to the rim three successive layers. The first layer is a plastic layer 24 made particularly from polyurethane or polyamide. This layer is surrounded by a second metal layer 26 formed by a steel ring. On the outer circumference of this second metal layer 26 is the third layer 28 forming the rim 16 of the rope pulley 10 containing the grooves 18.

This elevator rope pulley provides excellent noise dampening properties. By the comparably thick first plastic layer 24 having a thickness of about half the pulley radius a very good noise isolation between the hub and the radial out part of the rope pulley 10 is achieved, based on the noise insulating properties of the bulk material. The steel ring 26 which forms the second layer between the first layer 24 and the third rim layer 28 provides two borders where materials with extremely different acoustical impedances are in contact with each other. These boarders of different acoustical impedances provide a high barrier for the noise transmission so that this elevator rope pulley 10 according to the first embodiment of the invention provides excellent noise isolation between the hub 12 and the rim 16. This noise isolation is further improved by the fact that the grooves 18 are provided in the third plastic layer 28 of the elevator rope pulley. As usually the elevator ropes are made from steel the noise generation when the metal ropes run in the plastic grooves is essentially lower than when metal ropes run in metal grooves. Accordingly, the elevator rope pulley of figure 1 can be applied as a low noise pulley particularly in applications where a lot of diverting pulleys are used, particularly in elevators with a high suspension ratio of 4:1 or more.

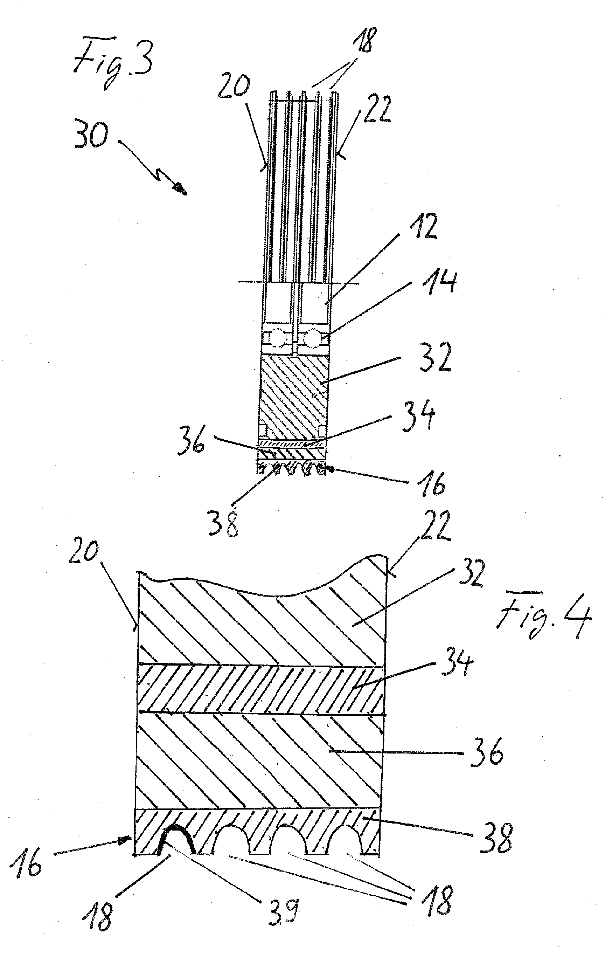

The elevator rope pulley 30 of figures 3 and 4 are widely identical to the elevator rope pulley of figures 1 and 2. Anyway in this embodiment the succession of layers in the radial direction of the pulley is different from that of figures 1 and 2.

Around the bearing 14 a first layer 32 is provided made of plastics, particularly made from polyamide or polyurethane. This first layer extends in radial direction about the half of the radius of the rope pulley 30. This first layer 32 is surrounded by a second layer 34 made from comparably thin steel ring. The thickness of this steel ring layer 34 is at most one fifth of the thickness of the first layer 32. The thin steel ring 34 is surrounded by a third layer 36 made of plastics, particularly made from polyurethane or polyamide. Also this layer is essentially thinner than the first plastic layer 32.

The third layer 36 made of plastics is again surrounded by a rim layer 38 comprising the grooves 18 of the elevator rope pulley 30. The rim layer may be made of steel or of hard plastics or rubber. The grooves 18 may be uncoated or may comprise a groove lining 39 made of plastics or rubber as to reduce the noise generation by the running of the elevator rope in the grooves. By providing the additional rim layer 38 the material of this layer can be optimized with respect to the groove properties so that a low wear can be combined with a good noise insulation.

The advantage of the second layer 34 consisting of a thin metal ring is the low cost production of such a layer which can be realized by cutting a ring from a metal tube.

It is to be remarked that the noise transmission takes place from the rim to the hub and/or from the hub to the rim and therefore it is essential that each layer is closed and it extends from the first end face 20 to the second end face 22 so that there are no material bridges which enable the noise to pass one of the three layers without running through the contact borders between each of the three layers. Features of the above embodiments can be combined with each other as long as this is technically reasonable. The invention can be varied within the scope of the appended patent claims.

## Claims

1. Elevator rope pulley (10; 30) configured to be arranged in the roping of the hoisting ropes and/or suspension ropes and/or compensation ropes of an elevator, which pulley has a metal hub (12) and a rim (16) containing grooves (18) for the ropes, which pulley has two end faces (20, 22) perpendicular to its rotation axis, **characterized in that** in radial direction of the pulley there is a succession of at least three concentric layers (24, 26, 28) surrounding the hub, which each extend from the first to the second end face, whereby the first and third layer (24, 28; 32, 36) consist of rubber or plastics whereas the second layer (26; 34) consists of metal.

2. Elevator rope pulley (10; 30) according to claim 1, wherein the first and third layer (24, 28; 32, 36) is made of Polyurethane or Polyamide.

3. Elevator rope pulley (10; 30) according to one of the preceding claims, wherein the first layer (26; 32) has a larger thickness in radial direction of the pulley than the second one (26; 34).

4. Elevator rope pulley (10; 30) according to claim 3, wherein the first layer (26; 32) extends over at least a third of the radius of the pulley in radial direction.

5. Elevator rope pulley (10; 30) according to any of the preceding claims, wherein the second layer (26; 34) is a metal ring, preferably made of stainless steel.

6. Elevator rope pulley (10; 30) according to claim 5, wherein the metal ring (26; 34) has at maximum a thickness of one fifth, preferably one tenth of the radius of the sheave (10; 30).

7. Elevator rope pulley (10; 30) according to claim 5 or 6, wherein the metal ring (26; 34) is located in the outer third portion of the radius of the pulley.

8. Elevator rope pulley (10; 30) according to one of the preceding claims, wherein each layer (24, 26, 28; 32, 34, 36) is formed as a ring arranged coaxially around the hub (12).

9. Elevator rope pulley (10; 30) according to any of the preceding claims, wherein the third layer (28) is the rim (16) containing the grooves (18).

10. Elevator rope pulley (10; 30) according to claim 9, wherein the hardness of the plastics is higher in the groove bottom than in the groove edges.

11. Elevator rope pulley (10; 30) according to one of the preceding claims, which elevator rope pulley is a traction sheave or a diverting pulley.

12. Elevator rope pulley (10; 30) according to one of the preceding claims, wherein the hub (12) comprises a bearing (14).

13. Elevator having an elevator rope pulley (10; 30) according to one of the preceding claims as traction sheave and/or diverting pulley.
